# EUROPEAN PATENT APPLICATION

(11) **EP 2 017 689 A2**
(43) Date of publication of application: **21.01.2009**
(21) Application number: 08104518.9
(22) Date of filing: 24.06.2008
(51) Int. Cl.: G06F 1/16

(54) **Display device and electronic apparatus**

(30) Priority: 29.06.2007 JP 2007173352
(71) Applicant: Fujitsu Limited, Kawasaki-shi, Kanagawa 211-8588 (JP)
(72) Inventor: Iijima, Takashi, Kawasaki-shi, Kanagawa 211-8588 (JP); Kobayashi, Sonomasa, Kawasaki-shi, Kanagawa 211-8588 (JP)
(74) Representative: Stebbing, Timothy Charles

(57) **Abstract**

A display device is provided with a display module (30) that has a display panel (310), which has a display screen where information is displayed, and an elastic member (320) that is attached to both edges of the display panel. The display device is further provided with a housing case (32B) that has holding protrusions (410), which stand apart from one another at positions spreading beyond the outline of the display module and matching the outline of the display module, and come into contact with the elastic member to hold the display module between one another.

## Description

The present invention relates to a display device in which a display panel is housed in a housing case, and an electronic apparatus provided with such a display device.

In recent years, portable electronic apparatuses provided with a display device where information is displayed, such as mobile phones and laptop personal computers, are becoming widespread. Since the miniaturization and weight reduction of the portable electronic apparatuses are strongly desired, thin display devices using a liquid crystal panel are widely applied.

The liquid crystal panel is constituted by stacking a display screen, a light source, a control circuit and the like, and in a display device using the liquid crystal panel, the liquid crystal panel is usually housed in a housing in order to improve its appearance and prevent damage. As a method of fixing the liquid crystal panel to the housing, metal ribs are provided on the liquid crystal panel, and the ribs are screwed onto the housing. However, since a portable electronic apparatus is often carried around, if the liquid crystal panel is tightly screwed onto the housing, it is very likely that when the apparatus falls, the liquid crystal panel will break, or that water will enter through the slightest gap between the housing and the liquid crystal panel.

In regard to this, Japanese Patent Application Publication No. 9-115378 has described an attachment structure in which the outer periphery of the liquid crystal panel is surround by an elastic member having an outline just matching the inside surface of the housing, and the liquid crystal panel is housed in the housing to which the elastic member is attached. According to the attachment mechanism described in Japanese Patent Application Publication No. 9-115378, the liquid crystal panel can be securely fixed to the housing, and the impact resistance and water resistance of the liquid crystal panel can be increased.

Incidentally, in recent years, not only mobile phones but also laptop personal computers have been equipped with a communication function and a photograph and/or video shooting function. In many personal computers equipped with a communication function and a shooting function, electronic components such as an antenna and a camera are incorporated into the housing of the display device, and signal lines for sending information obtained from the electronic components to its main body are laid out on the side of a display panel. In the attachment structure described in Japanese Patent Application Publication No. 9-115378, a space where the signal lines are laid out cannot be provided on the side of the display panel, thus a problem arises that it is difficult to apply the attachment structure to such an electronic apparatus.

As a method of providing in the housing a space where signal lines are laid out while keeping the impact resistance and water resistance, after a display panel to which an elastic member is attached is disposed in a larger housing, and the electronic components and signal lines are laid out, the member is fitted into a place between the lateral surfaces of the display panel and the housing to fix the display panel to the housing.

However, there is a problem that a task of fitting the member into a place between the display panel and the housing to fill a gap involves a lot of trouble. Further, the method described above has another problem that manufacturing process is limited because the electronic components such as an antenna must be disposed in the housing before the display panel is disposed.

Furthermore, these problems typically arise not only in personal computers and mobile phones, but also in display devices in which a display panel is housed in a housing.

The present invention has been made in view of the above circumstances and provides a display device and an electronic apparatus that allow a space for electronic components to be provided inside a housing, and a display panel to be fixed inside the housing without a gap and readily.

A display device of the present invention is provided with:
a display module that has a display panel, which has a display screen where information is displayed, and an elastic member that is attached to both edges of the display panel; and
a housing case that has holding protrusions, which stand apart from one another at positions spreading (extending) beyond the outline of the display module and matching the outline of the display module, and come into contact with the elastic member to hold the display module between one another (between the protrusions).

In the display device of the present invention, since the housing case is larger than the outline of the display module, a gap is formed between the holding protrusions and the housing case. Therefore, only by fitting the display module into the holding protrusions in the housing case, the display module can be fixed to the housing case so that a space where electronic components or the like are disposed is provided between the housing case and the display module. Since the elastic member is attached to the display panel, an impact given to the display panel can be suppressed when the display device is dropped, and a problem that water and dust enter the gap between the display panel and the housing case can be prevented.

Further, in the display device of the present invention, it is preferred that the display panel has rectangular shape, the elastic member covers four corners of the rectangle of the display panel, and the holding protrusions are provided at positions corresponding to the four corners.

Fitting the four corners of the display panel having a rectangular shape into the holding protrusions through the elastic member allows the display panel to be securely fixed to the housing case, and the impact resistance of the display panel to be improved.

Moreover, in the display device of the present invention, it is preferred that the housing case has a first member made of a conductive material, which covers the rear of the display module including the holding protrusions, and a second member made of a non-conductive material, which spreads around (surrounds) the first member.

In recent years, laptop personal computers have come equipped with a communication function. Since it is assumed that the laptop personal computer is carried around outside, it is preferred that the housing case is formed of high-strength metal. However, since metal, which is a conductive material, does not pass radio waves, there is a problem that an antenna for communication cannot be incorporated and hidden into the housing when the entire surface of the housing case is formed of metal.

In the display device of the present invention, since the back of the display module is covered with the first member made of a high-strength conductive material, and a space is formed on the lateral surfaces of the display module by the second member made of a non-conductive material that passes radio waves, an antenna or the like can be incorporated into the space. Further, an advantage is that a radio wave shielding effect can be obtained when the first member is made of a conductive material.

Moreover, in the display device of the present invention, it is preferred that an electronic component is provided in the housing case on a portion formed by the second member.

According to the preferred display device, the electronic component is disposed beside the display module, thus allowing the display device to be made thin.

Furthermore, in the display device of the present invention, it is preferred that the electronic component includes an antenna for wireless communication.

Since the portion formed by the second member passes radio waves, communication can be accomplished when an antenna for radio communication is disposed on this portion.

In addition, in the display device of the present invention, it is preferred that a front case is further provided, which is held by the housing case, and surrounds the display module to cover a portion between the edge of the display module and the housing case.

By providing the front case, in addition to the housing case, a liquid crystal module can be easily taken out when repair or part replacement are performed.

Further, in the display device of the present invention, it is preferred that the first member is fixed to the second member by a screw, and the elastic member has a notch to prevent interference with the screw, at a position corresponding to the screw held by the housing.

By providing the notch to prevent the interference with the screw at the position corresponding to the screw held by the housing, increase in the width of the device can be suppressed.

Furthermore, in the display device of the present invention, it is preferred that the display module further has, on the back of the display panel, a circuit board that has the same width as that of the display panel and is equipped with a display control circuit, which controls a view on the display screen, and
the elastic member is attached to both edges of the display panel and the circuit board, which are integrated.

By integrally fixing the display module and the circuit board by the elastic member, the display device can be made thin, and the display device can be easily assembled.

Further, in the display device of the present invention, it is preferred that, in addition to the display screen, the panel has an input device, which detects a contact position on the display surface, on the back side of the display surface where information is displayed, of the display screen.

It is preferred that the input device such as a touch panel is laid over the display screen without a gap so as to reliably detect a position touched by a touch pen or the like. According to the preferred display device, since the display panel is held and pressed by the elastic member attached to both sides of the display panel, the display screen and the input device are brought into intimate contact with each other. Accordingly, it is possible to precisely detect a position touched by the touch pen and a problem that dust enters the space between the display panel and the touch panel can be prevented.

It is preferred that an electronic apparatus of the present invention is provided with the display device, and an information processing circuit that generates display information, and sends the display information to the display module of the display device.

According to the electronic apparatus of the present invention, a space for electronic components can be provided inside the housing, and the display panel can be fixed inside the housing without a gap and readily.

Furthermore, in the electronic apparatus of the present invention, it is preferred that the electronic apparatus is provided with an arithmetic device into which an information processing circuit is incorporated, and the display device is openably/closably coupled to the arithmetic device.

Since the electronic apparatus in which the display device and the arithmetic device are openably/closably coupled can be folded to a small size, the electronic apparatus is often carried around; a dramatic effect can be obtained with the configuration of the present invention, which allows the impact resistance of the display panel to be improved.

Moreover, in the electronic apparatus of the present invention, it is preferred that the display device is coupled to the arithmetic device through a biaxial coupling member that is openable/closable with respect to the arithmetic device, and, in an open state, rotatable about a rotation axis that is perpendicular to the top surface of the arithmetic device.

In recent years, tablet personal computers have been developed, which allow instructions to be entered by pointing on the display screen with a touch pen or the like, in addition to conventional input operations using a keyboard or the like. According to the preferred electronic apparatus, when a tablet function is used, for example, the display device can be opened and rotated with respect to the arithmetic device, and the display device can be further closed and laid over the arithmetic device with the display screen turned outward, allowing operability to be improved.

Furthermore, it is preferred that the electronic apparatus of the present invention is provided with a display switching circuit that displays, in a first usage state in which the display device is opened with respect to the arithmetic device, information in a first display mode in which information is displayed on the display screen with the direction of the rotation axis as the vertical direction, and also displays, in a second usage state in which the display device is laid over the arithmetic device with the display screen turned outward, information in a second display mode in which information is displayed with the direction perpendicular to the rotation axis as the vertical direction.

The demands for using the tablet personal computer are high in a normal usage state (first usage state) using a keyboard or the like, using the display screen in landscape orientation with the direction of the rotation axis as the vertical direction, and when the tablet function is used (second usage state), using the display screen in portrait orientation with the direction perpendicular to the rotation axis as the vertical direction. According to the electronic apparatus of the present invention, information can be displayed in the orientation that is suited to each application in the first usage state and the second usage state.

According to the present invention, in an electronic apparatus in which two housings are openably/closably and rotatably coupled to each other, damage occurring when the housing is being rotated can be prevented.

Reference is made, by way of example only, to the accompanying drawings in which:
Fig. 1 is an exterior perspective view of a personal computer to which an embodiment of the present invention is applied;
Fig. 2 is an exterior perspective view showing an electronic apparatus in a state in which a display unit is closed over a main unit;
Fig. 3 is an exterior perspective view showing a state in which the display unit is rotated almost 90 degrees with respect to the main unit;
Fig. 4 is an exterior perspective view showing a state in which the display unit is laid over the main unit with the display screen turned upward;
Fig. 5 is a diagram of the internal configuration of the personal computer;
Fig. 6 is a diagram showing the display unit 30 in a state in which a front cover 32A shown in Fig. 1 is removed;
Fig. 7 is a diagram showing a state in which the display panel 310, along with an elastic member 320, is removed from a rear cover 32B;
Fig. 8 is a magnified view of an L-shaped protrusion 410;
Fig. 9 is a magnified view of an auxiliary protrusion;
Fig. 10 is a diagram showing the step of attaching the elastic member to the display panel;
Fig. 11 is a diagram showing a state in which the elastic member has been attached to the display panel;
Fig. 12 is a magnified view around the L-shaped protrusion in a state in which the display panel to which the elastic member is attached is fitted into; and
Fig. 13 is a magnified view around the auxiliary protrusion in a state in which the display panel to which the elastic member is attached is fitted into.

An embodiment of the present invention will now be described with reference to the drawings.

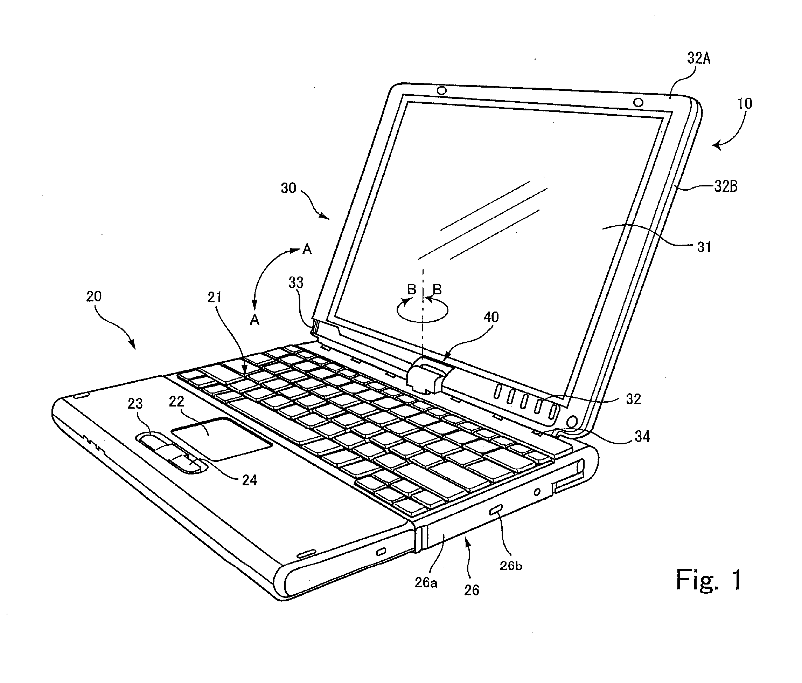

Fig. 1 is an exterior perspective view of a personal computer to which an embodiment of the present invention is applied.

A personal computer 10 shown in Fig. 1 is provided with an input device that incorporates an electromagnetic induction-type digitizer on the back side of a display screen 31, and detects the position on the display screen 31 indicated with a stylus pen so as to allow instruction input. Note that, as the input device, a touch panel which is incorporated into the display screen 31 may be used instead of the digitizer and the stylus pen.

The personal computer 10 is provided with a main unit 20 and a display unit 30, and the main unit 20 and the display unit 30 are coupled by a biaxial coupling unit 40 so that the display unit 30 can be opened/closed in the arrow A-A direction, and can be rotated (about the rotation axis perpendicular to the main unit 20) in the arrow B-B direction, with respect to the main unit 20. The personal computer 10 is shown in Fig. 1 in a state in which the display unit 30 is opened with respect to the main unit 20 (open state), and the open state corresponds to the first usage state according to the present invention. Further, the main unit 20 corresponds to an example of the arithmetic device according to the present invention, and the display unit 30 corresponds to an example of the display device according to the present invention.

The main unit 20 is provided with a keyboard 21, a track pad 22, a left click button 23 and a right click button 24, as well as a rubber display unit receiver 34 to cushion the impact and reduce abrasion due to collision caused when the display unit 30 is opened/closed and rotated. Furthermore, the main unit 20 is provided with, on its one side, an opening/closing cover 26a for an optical disk drive 26 where an optical disk such as CDs and DVDs is loaded, driven and accessed, and an eject button 26b, which is pushed to open the opening/closing cover 26a, is provided on the opening/closing cover 26a.

The display unit 30 of the personal computer 10 has the display screen 31 extending over the front surface thereof. The display unit 30 has push buttons 32 on its right edge under the display screen 31, and a fingerprint sensor 33, which recognizes a fingerprint when a person moves his/her finger along the sensor, on its left edge. Moreover, in the display unit 30, the display screen 31 is sandwiched from back and front by a front case 32A and a rear case 32B, and an antenna (described later) for communication or the like is disposed in a space formed by the front case 32A and the rear case 32B. The front case 32A corresponds to an example of the front case according to the present invention, and the rear case 32B corresponds to an example of the housing case according to the present invention. In the open state shown in Fig. 1, information is displayed on the display screen 31 with the direction of the rotation axis of the display unit 30 as the vertical direction.

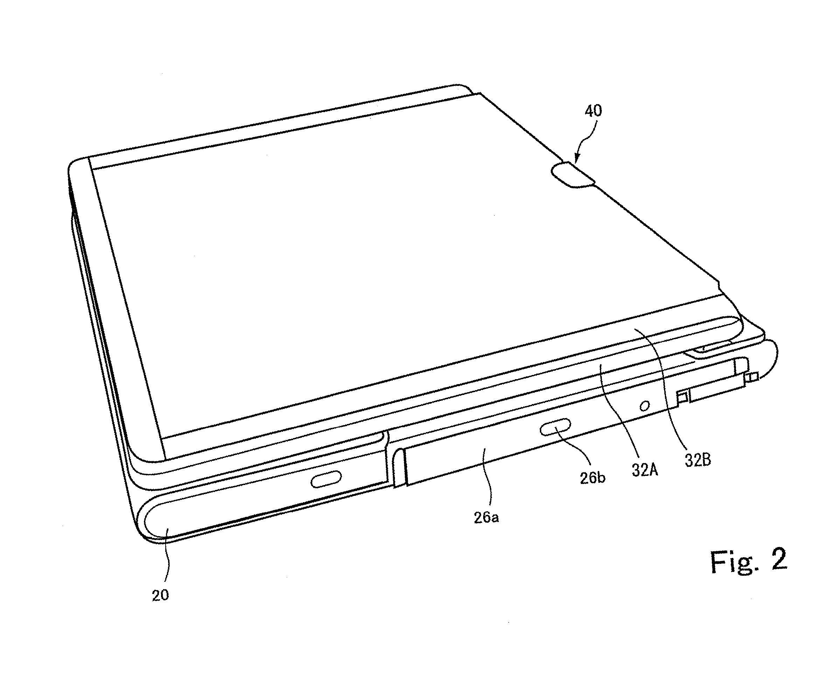

Fig. 2 is an exterior perspective view showing an electronic apparatus in a state in which the display unit 30 is closed over the main unit 20.

In Fig. 2, the display unit 30 is laid over the main unit 20 with the display screen 31 (see Fig. 1) turned toward the main unit 20. Hereinafter, this state is referred to as a first closed state.

In a normal state shown in Fig. 1, when the display unit 30 is closed in the arrow A direction, as shown in Fig. 2, the display screen 31 is hidden inward, and the back of the display screen 31 is exposed outward, which is in the first closed state. The personal computer 10 can be carried around in the first closed state, which prevents damage and dirt from affecting the display screen 31.

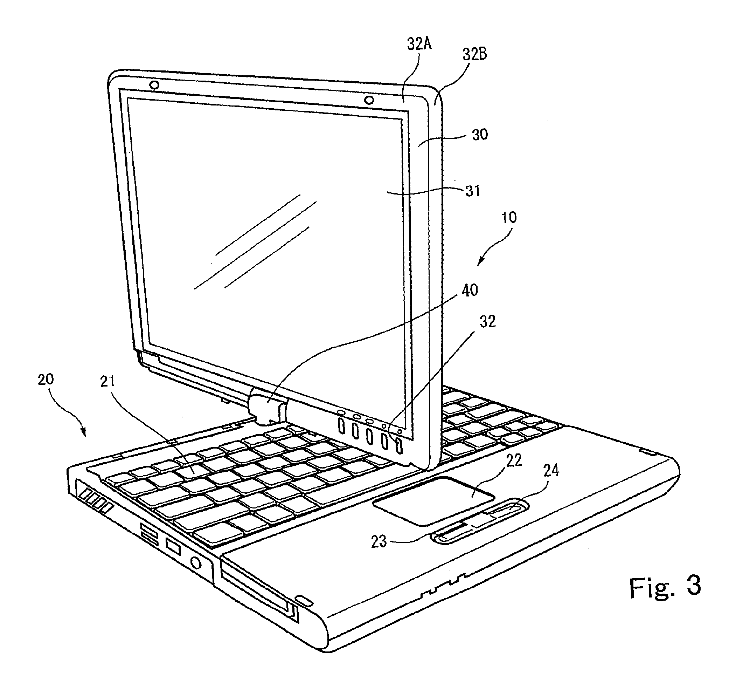

Fig. 3 is an exterior perspective view showing a state in which the display unit is rotated almost 90 degrees with respect to the main unit.

The display unit 30 can be rotated via this state so that the display screen 31 is turned to the side opposite to the keyboard 21.

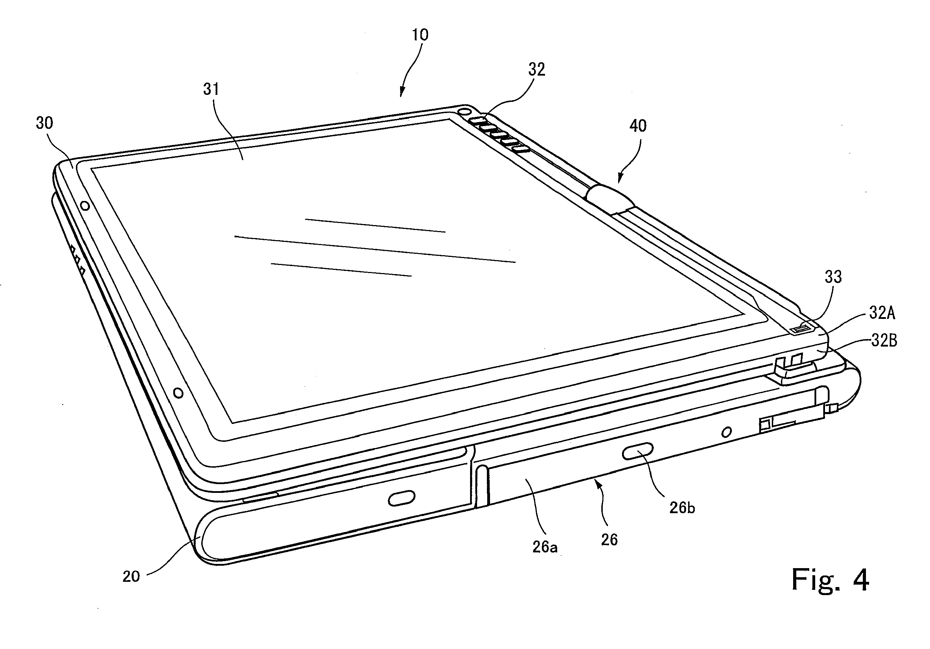

Fig. 4 is an exterior perspective view showing a state in which the display unit is laid over the main unit with the display screen turned upward.

The display unit 30 is rotated via an attitude (intermediate position) shown in Fig. 3 so that the display screen 31 is turned to the side opposite to the keyboard 21, and then the display unit 30 is laid over the main unit 20 with the back of the display screen 31 of the display unit 30 turned toward the main unit 20, which is in a second closed state shown in Fig. 4. The second closed state corresponds to an example of the second usage state according to the present invention. Hereinafter, an operation mode in which the personal computer 10 is used in the second closed state is referred to as a tablet mode.

As described above, the display screen 31 is a display screen having a pen input function, which is provided with an electromagnetic induction-type digitizer on the back side thereof, and detects the position indicated on the display screen; the usually adopted usage mode is one in which the personal computer 10 in the tablet mode is held with one arm, and the display screen is operated by holding a pen (not shown) with the hand of the other arm. Considering the relationship with the line of sight when the personal computer 10 in the tablet mode is held with an arm, the display image on the display screen 31 is rotated by 90 degrees compared to the normal state shown in Fig. 1. That is to say, in the tablet mode, information is displayed on the display screen 31 with the direction perpendicular to the rotation axis of the display unit 30 as the vertical direction.

Then, the internal configuration of the personal computer 10 will be described.

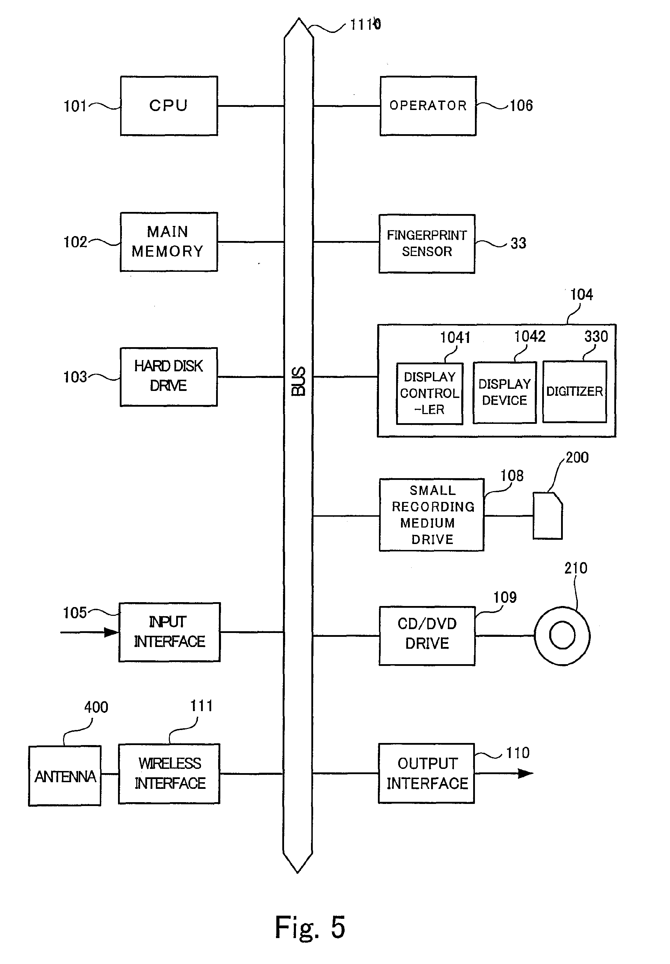

Fig. 5 is a diagram of the internal configuration of the personal computer 10.

As shown in Fig. 5, the personal computer 10 incorporates a CPU 101 that executes various programs, a main memory 102 to which the program stored in a hard disk device 103 is read out to be executed by the CPU 101, the hard disk device 103 in which the various programs and data are stored, a display mechanism 104 that is responsible for processing information display, the fingerprint sensor 33, which is also shown in Fig. 1, an operator 106 that includes the keyboard 21 and the track pad 22, a small recording medium drive 108 where a small recording medium 200 is loaded and accessed, a CD/DVD drive 109 where a CD-ROM 210 or a DVD is loaded and accessed, an input interface 105 that inputs data from an external device, an output interface 110 that outputs data to an external device, an antenna 400 that sends and receives radio waves, and a wireless interface 111 that uses the antenna 400 to perform wireless communication, and each component is connected to one another through a bus 1110. Note that the display mechanism 104 is composed of a display controller 1041 that controls the orientation of information displayed on the display screen 31 shown in Fig. 1, a display device 1042 that displays information on the display screen 31, and a digitizer 330 that is mounted on the back of the display screen 31 and detects a position indicated with the stylus pen. The display controller 1041 corresponds to an example of the display control section according to the present invention, and the antenna 400 corresponds to an example of the electronic component according to the present invention, and also corresponds to an example of the antenna according to the present invention.

Next, the internal configuration of the display unit 30 will be described in detail.

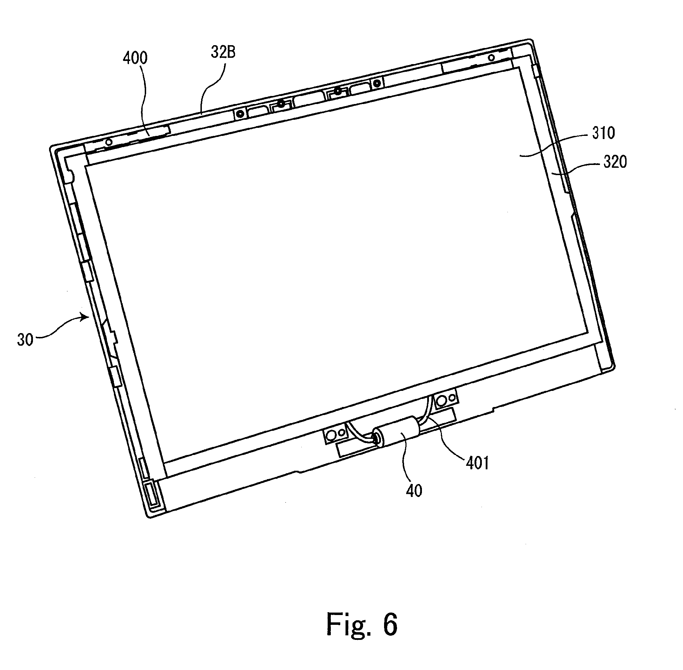

Fig. 6 is a diagram showing the display unit 30 in a state in which the front cover 32A shown in Fig. 1 is removed.

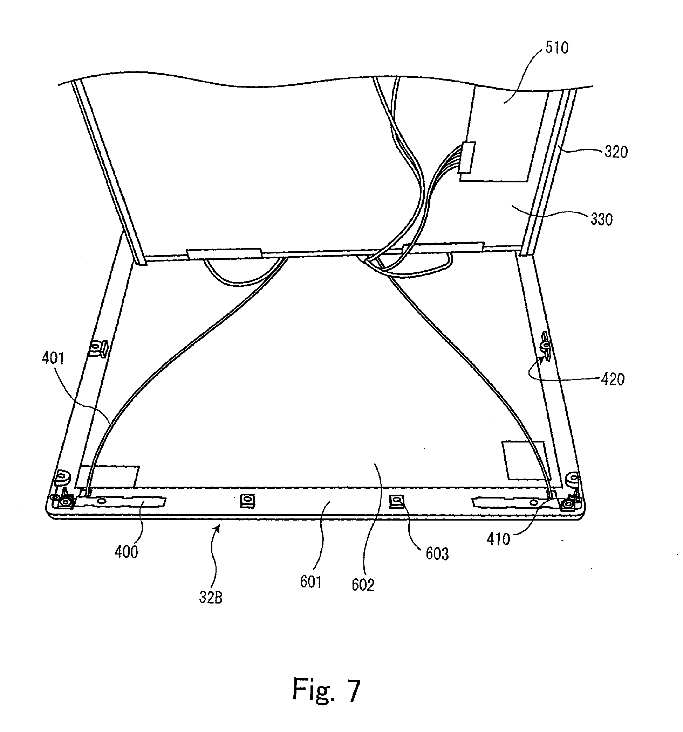

The display panel 310 shown in Fig. 6 has the display screen 31 shown in Fig. 1 on its surface, and the digitizer 330 (see Fig. 7) on its back side. In addition, an elastic member 320 is attached to both edges of the display panel 310. The display panel 310 corresponds to an example of the display panel according to the present invention, the elastic member 320 corresponds to an example of the elastic member according to the present invention, and the assembly of the display panel 310 and the elastic member 320 corresponds to an example of the display module according to the present invention.

The display panel 310 to which the elastic member 320 is attached is housed in the rear cover 32B of the display unit 30, and the antenna 400 that sends and receives radio waves is attached to the top of the rear cover 32B. Further, the antenna 400, and an electronic wire 401 that extends from the antenna 400 and is connected to the main unit 20 shown in Fig. 1 through the coupling member 40 are disposed in a space between the elastic member 320 and the rear cover 32B.

Fig. 7 is a diagram showing a state in which the display panel 310, along with the elastic member 320, is removed from the rear cover 32B.

The display panel 310 has the digitizer 330, which is bonded to the back side with respect to the surface on which the display screen 31 shown Fig. 1 is formed, and also has a transmission circuit 510 that transmits information detected by the digitizer 330 to the main unit 20.

Here, in the rear cover 32B, a panel portion 602 that covers the back of the display panel 310 is made of metal, on the other hand, an antenna portion 601 on which the antenna 400 and the electronic wire 401 shown in Fig. 6 are disposed is made of plastic. The panel portion 602 corresponds to an example of the first member according to the present invention, and the antenna portion 601 corresponds to an example of the second member according to the present invention. The panel portion 602 is made of metal, allowing the strength of the rear cover 32B to be increased and the impact resistance of the display panel 310 to be improved, and the antenna portion 601 is made of plastic, which is a non-conductive material, allowing the antenna 400 to reliably send/receive radio waves, and wireless communication to be performed.

Furthermore, L-shaped protrusions 410 matching the shape of each corner are formed at positions in the panel portion 602 corresponding to four corners of the assembly of the display panel 310 and the elastic member 320, and in addition, auxiliary protrusions 420 matching the outline of the elastic member 320 are formed at positions in the panel portion 602 corresponding to both sides of the assembly of the display panel 310 and the elastic member 320. The L-shaped protrusions 410 and the auxiliary protrusions 420 correspond to an example of the holding protrusions according to the present invention. The L-shaped protrusions 410 and the auxiliary protrusions 420 are fixed to the antenna portion 601 or the like by screws 603.

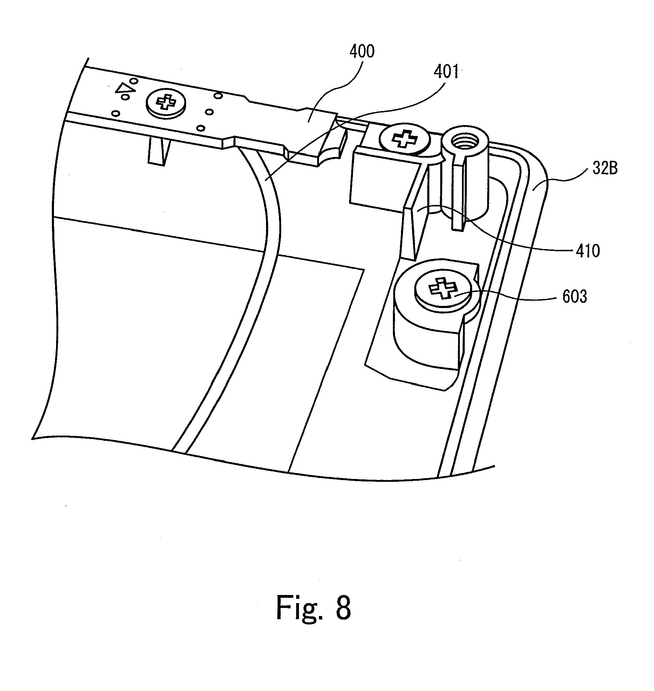

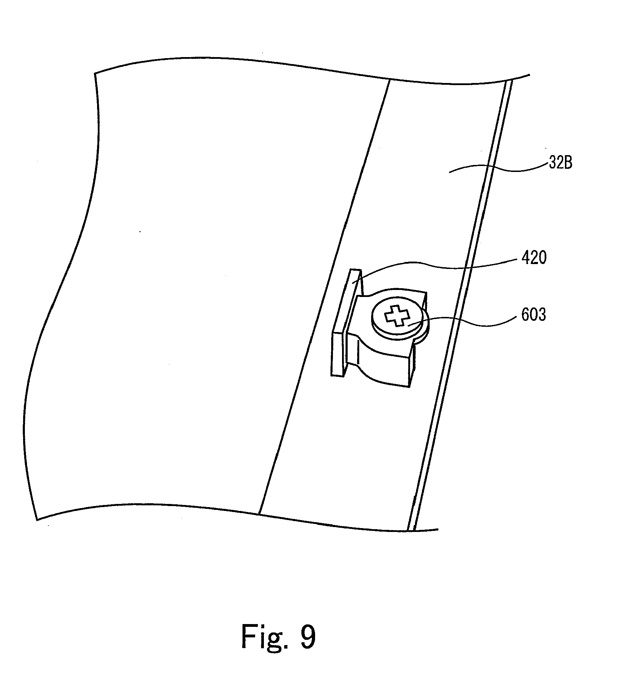

Fig. 8 is a magnified view of the L-shaped protrusion 410, and Fig. 9 is a magnified view of the auxiliary protrusion 420.

As shown in Figs. 8 and 9, the L-shaped protrusions 410 and the auxiliary protrusions 420 are formed away from the inner wall of the rear cover 32B. The display panel 310 to which the elastic member 320 is attached is to be fitted into the space to the inner side of the L-shaped protrusions 410 and the auxiliary protrusions 420.

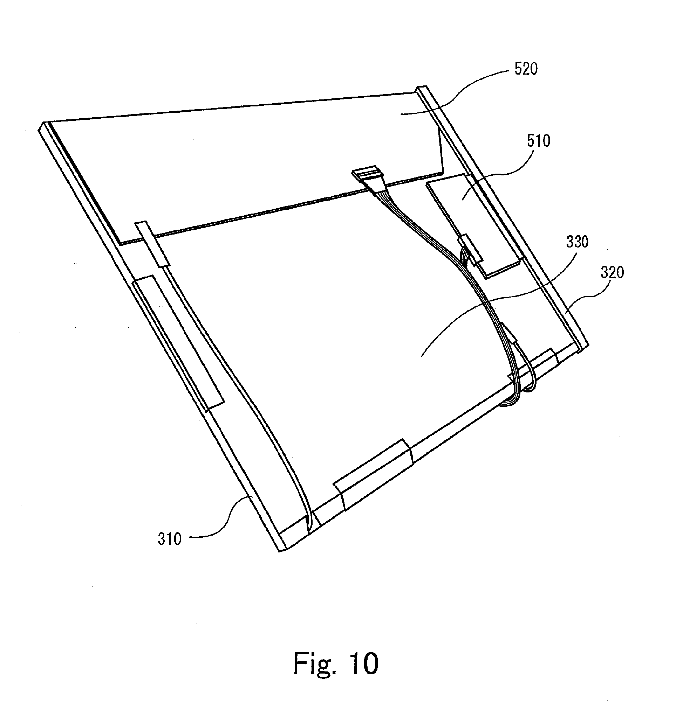

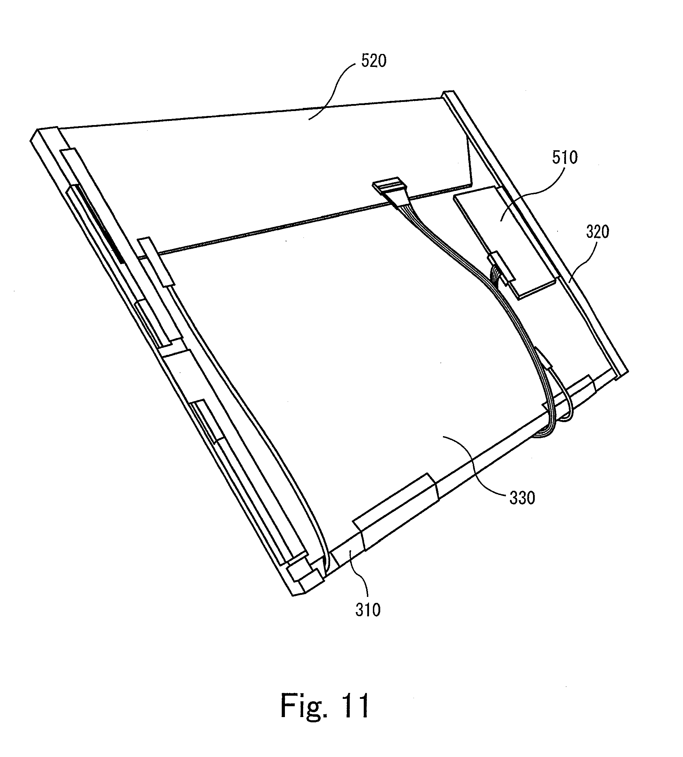

Fig. 10 is a diagram showing the step of attaching the elastic member 320 to the display panel 310, and Fig. 11 is a diagram showing a state in which the elastic member 320 has been attached to the display panel 310.

The back side of the display panel 310 is shown in Fig. 10, and the elastic member 320 is attached to only the right edge of the display panel 310 of Fig. 10. The digitizer 330 is bonded to the back side of the display panel 310, and a transmission circuit board 510, which is also shown in Fig. 11, and a control circuit board 520 that controls information displayed on the display screen 31 (see Fig. 1), which is provided on the surface of the display panel 310, are laid over the back side of the display panel 310. The control circuit board 520 constitutes a portion of the display controller 1041 shown in Fig. 5. The transmission circuit board 510 and the control circuit board 520 correspond to an example of the circuit board according to the present invention.

As shown in Fig. 11, the elastic member 320 integrally holds the display panel 310 and the control circuit board 520, and the control circuit board 520 is fixed in close contact with the display panel 310. Therefore, the personal computer 10 can be made thin, and can be easily assembled. Further, the elastic member 320 brings the digitizer 330 into intimate contact with the display screen 31 of the display panel 310, allowing the sensitivity of the digitizer 330 to be increased, and a problem that dust or the like enters the space between the display screen 31 and the digitizer 330 to be prevented.

In this manner, the display panel 310, the transmission circuit board 510 and the control circuit board 520 are held by the elastic member 320, and fitted into the space to the inner side of the L-shaped protrusions 410 and the auxiliary protrusions 420 shown in Figs. 8 and 9.

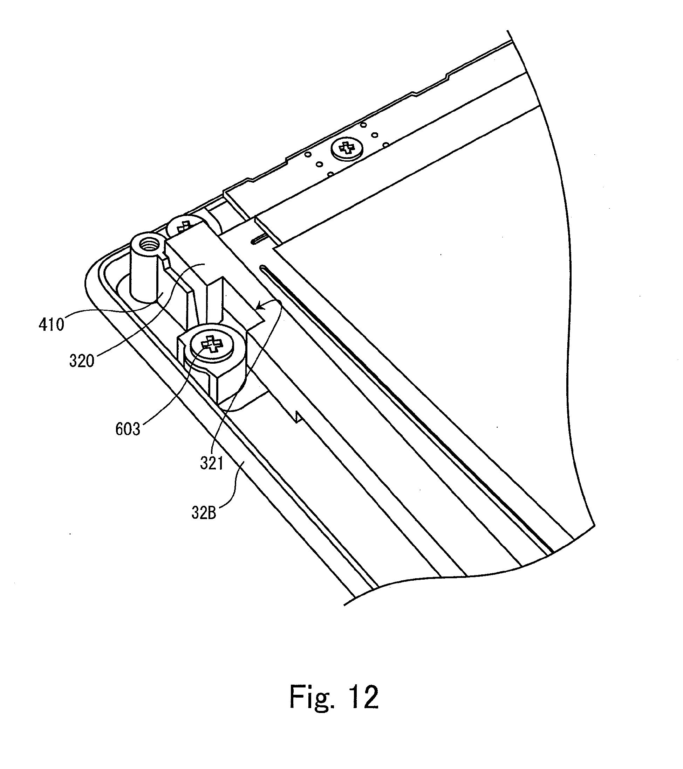

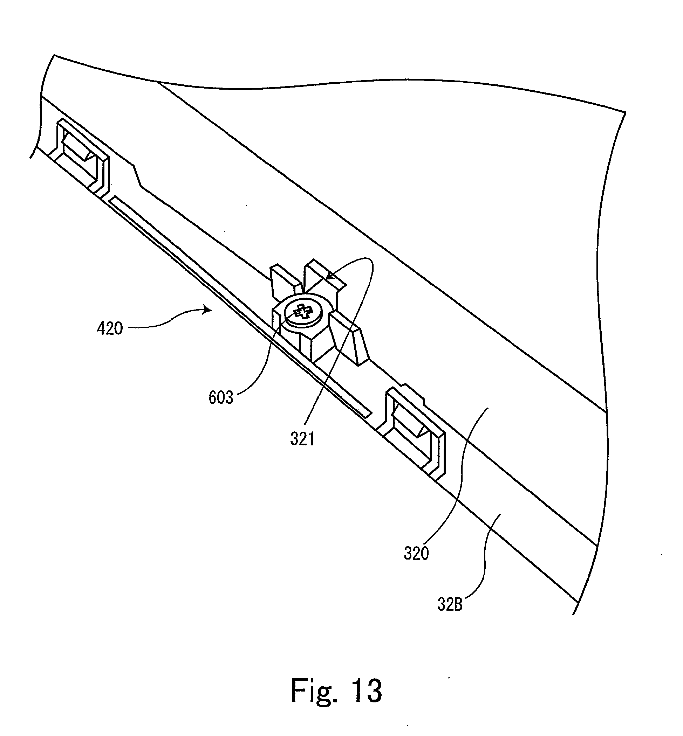

Fig. 12 is a magnified view around the L-shaped protrusion 410 in a state in which the display panel 310 to which the elastic member 320 is attached is fitted into, and Fig. 13 is a magnified view around the auxiliary protrusion 420 in a state in which the display panel 310 to which the elastic member 320 is attached is fitted into.

The position of the elastic member 320 attached to the display panel 310 is restricted by the L-shaped protrusions 410 and the auxiliary protrusions 420, and fixed to the rear cover 32B. Since the L-shaped protrusions 410 and the auxiliary protrusions 420 are provided at positions away from the inner wall of the rear cover 32B, only by fitting the display panel 310 to which the elastic member 320 is attached, a space on which the antenna 400 and the electronic wire 401 shown in Fig. 6 are disposed is formed. In this manner, according to the present embodiment, the display panel 310 can be fixed to the rear cover 32B without a gap and readily, and an effort to assemble the personal computer 10 can be reduced.

Furthermore, the elastic member 320 has a notch 321 to prevent the interference with the screw 603 at a position corresponding to the screw 603 that couples the antenna portion 601 and the panel portion 602 shown in Fig. 7. The notch 321 corresponds to an example of the notch according to the present invention. In this manner, the notch is provided on the portion corresponding to the screw 603 on the elastic member 320, allowing increase in the width of the personal computer 10 to be suppressed.

Although an example in which the electronic apparatus of the present invention is applied to a tablet personal computer has been described herein, the electronic apparatus of the present invention may be applied to a personal computer without a tablet function, an electronic notepad, and the like.

In addition, although an example in which an elastic member is attached to the right and left edges of the display panel has been described, the present invention may include an electronic apparatus in which the elastic member is attached to all the edges of the display panel.

## Claims

1. A display device, comprising:
a display module that has a display panel, which has a display screen where information is displayed, and an elastic member that is attached to both edges of the display panel; and
a housing case that has holding protrusions, which stand apart from one another at positions spreading beyond the outline of the display module and matching the outline of the display module, and come into contact with the elastic member to hold the display module between one another.

2. The display device according to claim 1, wherein the display panel has rectangular shape, the elastic member covers four corners of the rectangle of the display panel, and the holding protrusions are provided at positions corresponding to the four corners.

3. The display device according to claim 1 or 2, wherein the housing case has a first member made of a conductive material, which covers the rear of the display module including the holding protrusions, and a second member made of a non-conductive material, which spreads around the first member.

4. The display device according to claim 1, 2, or 3, wherein an electronic component is provided in the housing case on a portion formed by the second member.

5. The display device according to claim 4, wherein the electronic component includes a wireless antenna.

6. The display device according to any preceding claim, further comprising a front case, which is held by the housing case, and surrounds the display module to cover a portion between the edge of the display module and the housing case.

7. The display device according to any preceding claim, wherein the first member is fixed to the second member by a screw, and the elastic member has a notch to prevent interference with the screw, at a position corresponding to the screw held by the housing.

8. The display device according to any preceding claim, wherein
the display module further comprises, on the back of the display panel, a circuit board that has the same width as that of the display panel and is equipped with a display control circuit, which controls a view on the display screen, and
the elastic member is attached to both edges of the display panel and the circuit board, which are integrated.

9. The display device according to any preceding claim, wherein, in addition to the display screen, the display panel comprises an input device, which detects a position indicated on the display surface, on the back side of the display surface where information is displayed, of the display screen.

10. An electronic apparatus, comprising the display device according to any preceding claim, and an information processing circuit that generates display information, and sends the display information to the display module of the display device.

11. The electronic apparatus according to claim 10, further comprising an arithmetic device into which an information processing circuit is incorporated, wherein the display device is openably/closably coupled to the arithmetic device.

12. The electronic apparatus according to claim 11, wherein the display device is coupled to the arithmetic device through a biaxial coupling member that is openable/closable with respect to the arithmetic device, and, in an open state, rotatable about a rotation axis that is perpendicular to the top surface of the arithmetic device.

13. The electronic apparatus according to claim 12, further comprising a display switching circuit that displays, in a first usage state in which the display device is opened with respect to the arithmetic device, information in a first display mode in which information is displayed on the display screen with the direction of the rotation axis as the vertical direction, and also displays, in a second usage state in which the display device is laid over the arithmetic device with the display screen turned outward, information in a second display mode in which information is displayed with the direction perpendicular to the rotation axis as the vertical direction.
